# EUROPEAN PATENT APPLICATION

(11) **EP 4 474 497 A1**
(43) Date of publication of application: **11.12.2024**
(21) Application number: 23774419.8
(22) Date of filing: 01.03.2023
(51) Int. Cl.: C21D 9/56, C21D 3/06, C22C 38/00, C22C 38/06, C22C 38/58, C22C 38/60, C23C 2/02, C23C 2/28, C23C 2/40

(54) **CONTINUOUS ANNEALING APPARATUS, CONTINUOUS HOT DIP GALVANIZATION APPARATUS, AND METHOD FOR PRODUCING STEEL SHEET**

(30) Priority: 25.03.2022 JP 2022050835
(71) Applicant: JFE Steel Corporation, Tokyo 100-0011 (JP)
(72) Inventor: ENDOH, Kazuki, Tokyo 100-0011 (JP); MORIMOTO, Ryohei, Tokyo 100-0011 (JP); TOJI, Yuki, Tokyo 100-0011 (JP)
(74) Representative: Hoffmann Eitle
(86) International application number: PCT/JP2023/007690
(87) International publication number: WO 2023/181820

(57) **Abstract**

Provided is a continuous annealing line capable of producing a steel sheet having excellent hydrogen embrittlement resistance. The continuous annealing line 100 includes: a payoff reel 10 that uncoils a cold-rolled coil to feed a cold-rolled steel sheet S, an annealing furnace 20 that passes and continuously anneals the cold-rolled steel sheet S, wherein a heating zone 22, a soaking zone 24, and a cooling zone 26 are disposed in this order from upstream in a sheet passing direction, the annealing furnace 20 annealing the cold-rolled steel sheet S in a reducing atmosphere containing hydrogen in the heating zone 22 and the soaking zone 24, and cooling the cold-rolled steel sheet S in the cooling zone 26; a downstream line 30 that continuously passes the cold-rolled steel sheet S discharged from the annealing furnace 20 therethrough; a tension reel 50 that coils the cold-rolled steel sheet S passing through the downstream line 30; and a magnetic field applying apparatus 60 that applies a steady magnetic field along the sheet transverse direction of the cold-rolled steel sheet S to the cold-rolled steel sheet S being passed from the cooling zone 26 to the tension reel 50.

## Description

### TECHNICAL FIELD

The present disclosure relates to a continuous annealing line and a continuous hot-dip galvanizing line, and a method of producing a steel sheet. In particular, the present disclosure relates to a continuous annealing line, a continuous hot-dip galvanizing line, and a method of producing a steel sheet for producing a steel sheet having excellent hydrogen embrittlement resistance with a low hydrogen content in the steel, which is suitable for use in the fields of automobiles, home appliances, and construction materials.

### BACKGROUND

For example, when an annealed steel sheet and a hot-dip galvanized steel sheet are produced using a continuous annealing line and a continuous hot-dip galvanizing line, respectively, in each case the steel sheet is annealed in a reducing atmosphere containing hydrogen, which causes hydrogen to enter the steel sheet during annealing. Hydrogen in a steel sheet decreases formability of the steel sheet, such as ductility, bendability, and stretch flangeability. Hydrogen in a steel sheet may also cause embrittlement and delayed fracture. Accordingly, treatment to decrease steel sheet hydrogen content is required.

For example, hydrogen content in steel can be decreased by leaving product coils at room temperature after production in a continuous annealing line or a continuous hot-dip galvanizing line. However, at room temperature, hydrogen takes time to move from the interior of a steel sheet to the surface and desorb from the surface, requiring some weeks or more to sufficiently decrease hydrogen content in steel. Accordingly, the space and time required for such dehydrogenation treatment is a problem in the production process.

Further, Patent Literature (PTL) 1 describes a method of decreasing hydrogen content in steel by holding an annealed steel sheet, a hot-dip galvanized steel sheet, or a galvannealed steel sheet in a temperature range from 50 °C or more to 300 °C or less for 1800 s or more to 43,200 s or less.

### CITATION LIST

### Patent Literature

PTL 1: WO 2019/188642 A1

### SUMMARY

### (Technical Problem)

Regarding PTL 1, there are concerns about changes in mechanical properties such as increased yield stress and tempering embrittlement due to microstructural changes caused by heating.

In view of the above issues, it would be helpful to provide a continuous annealing line, a continuous hot-dip galvanizing line, and a method of production capable of producing a steel sheet having excellent hydrogen embrittlement resistance without compromising production efficiency and without changing mechanical properties of the steel sheet.

### (Solution to Problem)

In order to solve the above issues, the inventors conducted intensive studies and found the following. After a steel sheet is annealed in a reducing atmosphere containing hydrogen in a continuous annealing line (CAL) or a continuous hot-dip galvanizing line (CGL), hydrogen in the steel sheet is decreased sufficiently efficiently by applying a steady magnetic field along the sheet transverse direction of the steel sheet during continued sheet passage, in a cooling process from the annealing temperature to room temperature. This is presumably due to the following mechanisms. Applying a steady magnetic field to a steel sheet changes the form of the steel sheet due to the magnetostriction effect. The steady magnetic field applied to the steel sheet is along the sheet transverse direction, and therefore lattice spacing of the steel sheet expands along a main surface (front and back) direction of the steel sheet, along the sheet transverse direction. As a result, hydrogen in the steel sheet diffuses toward the main surfaces (front and back) of the steel sheet, where potential energy is low, and desorbs from the main surfaces.

The present disclosure is based on these findings, and primary features of the present disclosure are as follows.
[1] A continuous annealing line comprising:
   a payoff reel configured to uncoil a cold-rolled coil to feed a cold-rolled steel sheet;
   an annealing furnace configured to pass and continuously anneal the cold-rolled steel sheet, wherein a heating zone, a soaking zone, and a cooling zone are disposed in this order from upstream in a sheet passing direction, the annealing furnace annealing the cold-rolled steel sheet in a reducing atmosphere containing hydrogen in the heating zone and in the soaking zone, and cooling the cold-rolled steel sheet in the cooling zone;
   a downstream line configured to continuously pass the cold-rolled steel sheet discharged from the annealing furnace therethrough;
   a tension reel configured to coil the cold-rolled steel sheet passing through the downstream line; and
   a magnetic field applying apparatus configured to apply a steady magnetic field along the sheet transverse direction of the cold-rolled steel sheet to the cold-rolled steel sheet being passed from the cooling zone to the tension reel.
[2] The continuous annealing line according to [1], above, wherein the magnetic field applying apparatus is disposed in the cooling zone.
[3] The continuous annealing line according to [1] or [2], above, wherein the magnetic field applying apparatus is disposed in a position that enables application of the magnetic field to the cold-rolled steel sheet passing through the downstream line.
[4] The continuous annealing line according to any one of [1] to [3], above, wherein the magnetic field applying apparatus comprises an electromagnet disposed outside a transverse direction edge of the cold-rolled steel sheet, and the electromagnet has a magnetic pole face facing a transverse direction edge surface of the cold-rolled steel sheet.
[5] The continuous annealing line according to any one of [1] to [3], above, wherein the magnetic field applying apparatus comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.
[6] The continuous annealing line according to any one of [1] to [5], above, wherein the magnetic field applying apparatus is set so that magnetic flux density in the sheet transverse direction of the cold-rolled steel sheet is 0.1 T to 15 T.
[7] A continuous hot-dip galvanizing line comprising:
   the continuous annealing line according to [1], above; and
   as the downstream line, a hot-dip galvanizing bath disposed downstream of the annealing furnace in the sheet passing direction and in which the cold-rolled steel sheet is dipped to apply a hot-dip galvanized coating onto the cold-rolled steel sheet.
[8] The continuous hot-dip galvanizing line according to [7], above, wherein the magnetic field applying apparatus is disposed in a position that enables application of the magnetic field to the cold-rolled steel sheet being passed upstream from the hot-dip galvanizing bath.
[9] The continuous hot-dip galvanizing line according to [7] or [8], above, wherein the magnetic field applying apparatus is disposed in a position that enables application of the magnetic field to the cold-rolled steel sheet being passed downstream from the hot-dip galvanizing bath.
[10] The continuous hot-dip galvanizing line according to [7], above, further comprising, as the downstream line, an alloying furnace disposed downstream of the hot-dip galvanizing bath in the sheet passing direction and through which the cold-rolled steel sheet is passed to heat and alloy the hot-dip galvanized coating.
[11] The continuous hot-dip galvanizing line according to [10], above, wherein the magnetic field applying apparatus is disposed in a position that enables application of the magnetic field to the cold-rolled steel sheet being passed upstream from the hot-dip galvanizing bath.
[12] The continuous hot-dip galvanizing line according to [10] or [11], above, wherein the magnetic field applying apparatus is disposed in a position that enables application of the magnetic field to the cold-rolled steel sheet being passed downstream from the hot-dip galvanizing bath.
[13] The continuous hot-dip galvanizing line according to any one of [7] to [12], above, wherein the magnetic field applying apparatus comprises an electromagnet disposed outside a transverse direction edge of the cold-rolled steel sheet, and the electromagnet has a magnetic pole face facing a transverse direction edge surface of the cold-rolled steel sheet.
[14] The continuous hot-dip galvanizing line according to any one of [7] to [12], above, wherein the magnetic field applying apparatus comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.
[15] The continuous hot-dip galvanizing line according to any one of [7] to [14], above, wherein the magnetic field applying apparatus is set so that magnetic flux density in the sheet transverse direction of the cold-rolled steel sheet is 0.1 T to 15 T.
[16] A method of producing a steel sheet, the method comprising, in the following order:
   a process (A) of uncoiling a cold-rolled coil to feed a cold-rolled steel sheet by a payoff reel;
   a process (B) of passing the cold-rolled steel sheet through an annealing furnace wherein a heating zone, a soaking zone, and a cooling zone are disposed in this order from upstream in a sheet passing direction, to continuously anneal the cold-rolled steel sheet by a process (B-1) of annealing the cold-rolled steel sheet in a reducing atmosphere containing hydrogen in the heating zone and in the soaking zone, and a process (B-2) of cooling the cold-rolled steel sheet in the cooling zone;
   a process (C) of continuously passing the cold-rolled steel sheet discharged from the annealing furnace; and
   a process (D) of coiling the cold-rolled steel sheet by a tension reel to obtain a product coil,
   wherein the method further comprises, in a period from the process (B-2) and prior to the process (D), a magnetic field applying process of applying a steady magnetic field along the sheet transverse direction of the cold-rolled steel sheet to the cold-rolled steel sheet being passed.
[17] The method of producing a steel sheet according to [16], above, wherein the magnetic field applying process is performed in the process (B-2).
[18] The method of producing a steel sheet according to [16] or [17], above, wherein the magnetic field applying process is performed in the process (C).
[19] The method of producing a steel sheet according to [16], above, wherein the process (C) comprises a process (C-1) of dipping the cold-rolled steel sheet into a hot-dip galvanizing bath disposed downstream of the annealing furnace in the sheet passing direction to apply a hot-dip galvanized coating onto the cold-rolled steel sheet.
[20] The method of producing a steel sheet according to [19], above, wherein the magnetic field applying process is performed prior to the process (C-1).
[21] The method of producing a steel sheet according to [19] or [20], above, wherein the magnetic field applying process is performed after the process (C-1).
[22] The method of producing a steel sheet according to [19], above, wherein the process (C) further comprises, after the process (C-1), a process (C-2) of passing the cold-rolled steel sheet though an alloying furnace disposed downstream of the hot-dip galvanizing bath, to heat and alloy the hot-dip galvanized coating.
[23] The method of producing a steel sheet according to [22], above, wherein the magnetic field applying process is performed prior to the process (C-1).
[24] The method of producing a steel sheet according to [22] or [23], above, wherein the magnetic field applying process is performed after the process (C-1).
[25] The method of producing a steel sheet according to any one of [16] to [24], above, wherein magnetic flux density in the sheet transverse direction of the cold-rolled steel sheet is 0.1 T to 15 T in the magnetic field applying process.
[26] The method of producing a steel sheet according to any one of [16] to [25], above, wherein, in the magnetic field applying process, a steady magnetic field is applied by a magnetic field applying apparatus that comprises an electromagnet disposed outside a transverse direction edge of the cold-rolled steel sheet, and the electromagnet has a magnetic pole face facing a transverse direction edge surface of the cold-rolled steel sheet.
[27] The method of producing a steel sheet according to any one of [16] to [25], above, wherein, in the magnetic field applying process, a steady magnetic field is applied by a magnetic field applying apparatus that comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.
[28] The method of producing a steel sheet according to any one of [16] to [27], above, wherein the cold-rolled steel sheet is a high strength steel sheet having a tensile strength of 590 MPa or more.
[29] The method of producing a steel sheet according to any one of [16] to [28], above, wherein the cold-rolled steel sheet comprises a chemical composition containing (consisting of), in mass%,
   C: 0.030 % to 0.800 %,
   Si: 0.01 % to 3.00 %,
   Mn: 0.01 % to 10.00 %,
   P: 0.001 % to 0.100 %,
   S: 0.0001 % to 0.0200 %,
   N: 0.0005 % to 0.0100 %, and
   Al: 0.001 % to 2.000 %,
   with the balance being Fe and inevitable impurity.
[30] The method of producing a steel sheet according to [29], above, wherein the chemical composition further contains, in mass%, at least one element selected from the group consisting of
   Ti: 0.200 % or less,
   Nb: 0.200 % or less,
   V: 0.500 % or less,
   W: 0.500 % or less,
   B: 0.0050 % or less,
   Ni: 1.000 % or less,
   Cr: 1.000 % or less,
   Mo: 1.000 % or less,
   Cu: 1.000 % or less,
   Sn: 0.200 % or less,
   Sb: 0.200 % or less,
   Ta: 0.100 % or less,
   Ca: 0.0050 % or less,
   Mg: 0.0050 % or less,
   Zr: 0.1000 % or less, and
   REM: 0.0050 % or less.
[31] The method of producing a steel sheet according to any one of [16] to [27], above, wherein the cold-rolled steel sheet is a stainless steel sheet comprising a chemical composition containing (consisting of), in mass%,
   C: 0.001 % to 0.400 %,
   Si: 0.01 % to 2.00 %,
   Mn: 0.01 % to 5.00 %,
   P: 0.001 % to 0.100 %,
   S: 0.0001 % to 0.0200 %,
   Cr: 9.0 % to 28.0 %,
   Ni: 0.01 % to 40.0 %,
   N: 0.0005 % to 0.500 %, and
   Al: 0.001 % to 3.000 %,
   with the balance being Fe and inevitable impurity.
[32] The method of producing a steel sheet according to [31], above, wherein the chemical composition further contains, in mass%, at least one element selected from the group consisting of
   Ti: 0.500 % or less,
   Nb: 0.500 % or less,
   V: 0.500 % or less,
   W: 2.000 % or less,
   B: 0.0050 % or less,
   Mo: 2.000 % or less,
   Cu: 3.000 % or less,
   Sn: 0.500 % or less,
   Sb: 0.200 % or less,
   Ta: 0.100 % or less,
   Ca: 0.0050 % or less,
   Mg: 0.0050 % or less,
   Zr: 0.1000 % or less, and
   REM: 0.0050 % or less.
[33] The method of producing a steel sheet according to any one of [16] to [32], above, wherein the product coil has a diffusible hydrogen content of 0.50 mass ppm or less.

### (Advantageous Effect)

The continuous annealing line and the continuous hot-dip galvanizing line, as well as the method of producing a steel sheet, enable the production of a steel sheet having excellent hydrogen embrittlement resistance without compromising production efficiency and without changing mechanical properties of the steel sheet.

### BRIEF DESCRIPTION OF THE DRAWINGS

In the accompanying drawings:
FIG. 1 is a schematic diagram of a continuous annealing line 100 according to an embodiment of the present disclosure;
FIG. 2 is a schematic diagram of a continuous hot-dip galvanizing line 200 according to an embodiment of the present disclosure;
FIG. 3 is a schematic diagram of a continuous hot-dip galvanizing line 300 according to another embodiment of the present disclosure;
FIG. 4 is a schematic diagram illustrating configuration of a pair of electromagnets 60A, 60B as a magnetic field applying apparatus used in each embodiment of the present disclosure and magnetic field lines generated from the electromagnets 60A, 60B; and
FIG. 5A and FIG. 5B are diagrams schematically illustrating examples of installation of the pair of electromagnets 60A, 60B as a magnetic field applying apparatus with respect to a cold-rolled steel sheet S being passed, according to each embodiment of the present disclosure.

### DETAILED DESCRIPTION

An embodiment of the present disclosure relates to a continuous annealing line (CAL), and another embodiment of the present disclosure relates to a continuous hot-dip galvanizing line (CGL).

A method of producing a steel sheet according to an embodiment of the present disclosure is realized by a continuous annealing line (CAL) or a continuous hot-dip galvanizing line (CGL).

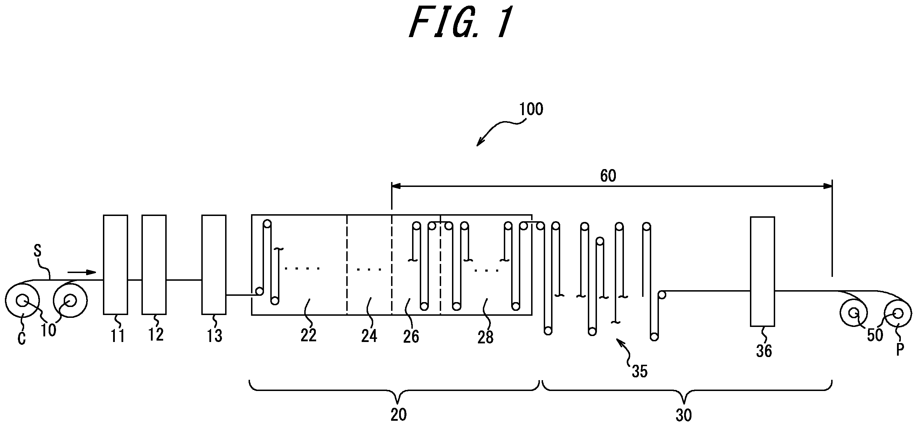

Referring to FIG. 1, a continuous annealing line (CAL) 100 according to a first embodiment of the present disclosure includes a payoff reel 10 that uncoils a cold-rolled coil C to feed a cold-rolled steel sheet S, an annealing furnace 20 that passes and continuously anneals the cold-rolled steel sheet S, a downstream line 30 that continuously passes the cold-rolled steel sheet S discharged from the annealing furnace 20 therethrough, and a tension reel 50 that coils the cold-rolled steel sheet S passing through the downstream line 30 to make a product coil P. In the annealing furnace 20, a heating zone 22, a soaking zone 24, and a cooling zone 26 are disposed in this order from an upstream side in the sheet passing direction. The cold-rolled steel sheet S is annealed in the heating zone 22 and the soaking zone 24 in a reducing atmosphere containing hydrogen, while the cold-rolled steel sheet S is cooled in the cooling zone 26. The annealing furnace 20 of the CAL 100 preferably includes an overaging treatment zone 28 downstream of the cooling zone 26, but this is not required. In the overaging treatment zone 28, the cold-rolled steel sheet S is subjected to overaging treatment. According to this embodiment, the CAL 100 produces a product coil of a cold-rolled annealed steel sheet (CR).

Referring to FIG. 1, a method of producing a steel sheet according to the first embodiment realized by the continuous annealing line (CAL) 100 includes, in the following order: a process (A) of uncoiling a cold-rolled coil C to feed a cold-rolled steel sheet (steel strip) S by the payoff reel 10; a process (B) of passing the cold-rolled steel sheet S through the annealing furnace 20 wherein the heating zone 22, the soaking zone 24, and the cooling zone 26 are disposed in this order from upstream in the sheet passing direction, to continuously anneal the cold-rolled steel sheet by a process (B-1) of annealing the cold-rolled steel sheet S in a reducing atmosphere containing hydrogen in the heating zone 22 and the soaking zone 24, and a process (B-2) of cooling the cold-rolled steel sheet S in the cooling zone 26; a process (C) of continuously passing the cold-rolled steel sheet S discharged from the annealing furnace 20; and a process (D) of coiling the cold-rolled steel sheet S by the tension reel 50 to obtain a product coil P. In a continuous annealing process (B) according to the annealing furnace 20 of the CAL 100, a process (B-3) of overaging treatment is preferably applied to the cold-rolled steel sheet S in the overaging treatment zone 28, optionally disposed downstream of the cooling zone 26, but this process is not required. This embodiment is a method of producing a product coil of a cold-rolled annealed steel sheet (CR) via the CAL 100.

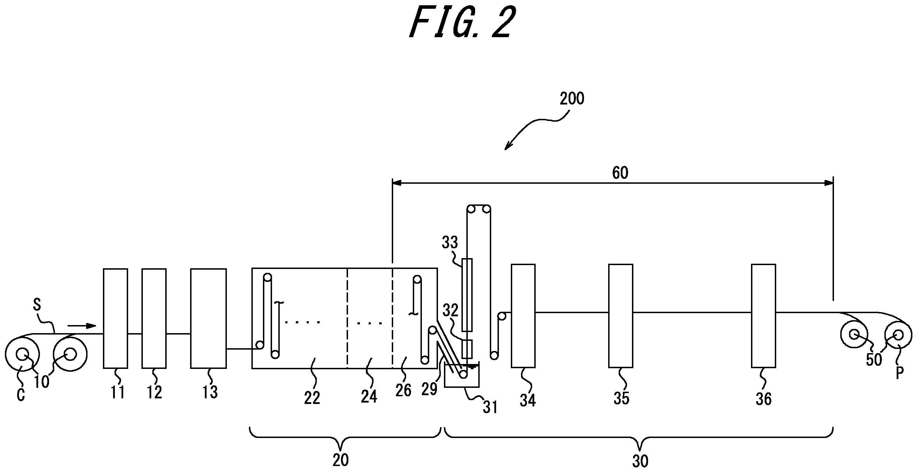

Referring to FIG. 2, a continuous hot-dip galvanizing line (CGL) 200 according to a second embodiment of the present disclosure includes the payoff reel 10 that uncoils a cold-rolled coil C to feed a cold-rolled steel sheet S, the annealing furnace 20 that passes and continuously anneals the cold-rolled steel sheet S, the downstream line 30 that continuously passes the cold-rolled steel sheet S discharged from the annealing furnace 20 therethrough, and the tension reel 50 that coils the cold-rolled steel sheet S passing through the downstream line 30 to make a product coil P. In the annealing furnace 20, the heating zone 22, the soaking zone 24, and the cooling zone 26 are disposed in this order from an upstream side in the sheet passing direction. The cold-rolled steel sheet S is annealed in the heating zone 22 and the soaking zone 24 in a reducing atmosphere containing hydrogen, while the cold-rolled steel sheet S is cooled in the cooling zone 26. The CGL 200, as the downstream line 30, includes a hot-dip galvanizing bath 31 that is disposed downstream of the annealing furnace 20 in the sheet passing direction and in which the cold-rolled steel sheet S is dipped to apply a hot-dip galvanized coating, and an alloying furnace 33 that is disposed downstream of the hot-dip galvanizing bath 31 in the sheet passing direction and in which the cold-rolled steel sheet S is passed through to heat alloy the hot-dip galvanized coating. According to this embodiment, the CGL 200 produces a product coil of a galvannealed steel sheet (GA) with alloyed galvanized layers. When the steel sheet S is only passed through the alloying furnace 33 and no heating alloying is performed, a product coil of a hot-dip galvanized steel sheet (GI) is produced in which the galvanized layers are not alloyed.

Referring to FIG. 2, a method of producing a steel sheet according to the second embodiment realized by the continuous hot-dip galvanizing line (CGL) 200 includes, in the following order: the process (A) of uncoiling a cold-rolled coil C to feed a cold-rolled steel sheet (steel strip) S by the payoff reel 10; the process (B) of passing the cold-rolled steel sheet S through the annealing furnace 20 wherein the heating zone 22, the soaking zone 24, and the cooling zone 26 are disposed in this order from upstream in the sheet passing direction, to continuously anneal the cold-rolled steel sheet by a process (B-1) of annealing the cold-rolled steel sheet S in a reducing atmosphere containing hydrogen in the heating zone 22 and the soaking zone 24, and a process (B-2) of cooling the cold-rolled steel sheet S in the cooling zone 26; the process (C) of continuously passing the cold-rolled steel sheet S discharged from the annealing furnace 20; and the process (D) of coiling the cold-rolled steel sheet S by the tension reel 50 to obtain a product coil P. The process (C) includes a process (C-1) of dipping the cold-rolled steel sheet S into the hot-dip galvanizing bath 31 disposed downstream of the annealing furnace 20 in the sheet passing direction to apply a hot-dip galvanized coating onto the cold-rolled steel sheet S, and then a process (C-2) of continuing to pass the cold-rolled steel sheet S through the alloying furnace 33 disposed downstream of the hot-dip galvanizing bath 31. This embodiment is a method of producing a product coil of a galvannealed steel sheet (GA) with alloyed galvanized layers via the CGL 200.

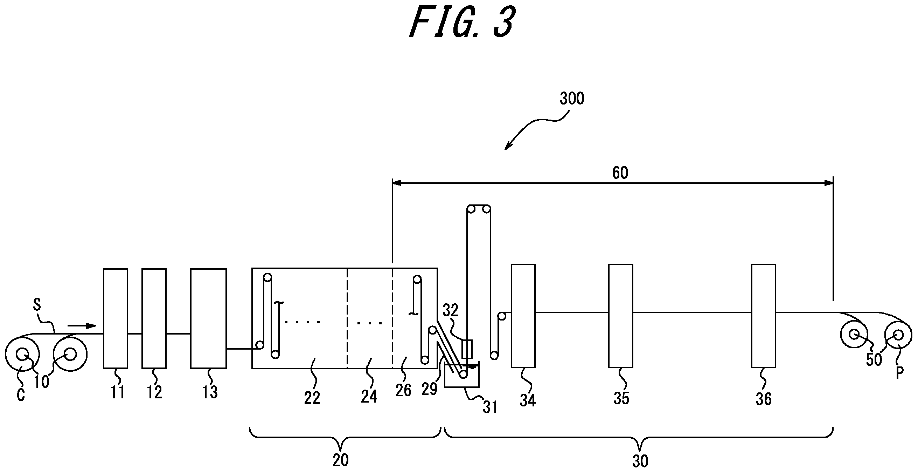

Referring to FIG. 3, a continuous hot-dip galvanizing line (CGL) 300 according to a third embodiment of the present disclosure has the same configuration as the CGL 200 except for not including the alloying furnace 33. According to this embodiment, the CGL 300 produces a product coil of a hot-dip galvanized steel sheet (GI) with unalloyed galvanized layers.

That is, the method of producing a steel sheet according to the third embodiment, in which the process (C-1) is performed and the process (C-2) is not performed, is realized, for example, by the CGL 300 without the alloying furnace 33, or by only passing the steel sheet S through the alloying furnace 33 of the CGL 200 without heat alloying being performed. This embodiment is a method of producing a product coil of a hot-dip galvanized steel sheet (GI) in which the galvanized layers are not alloyed, via the CGL 200 or the CGL 300.

The following is a detailed description of each configuration of the CAL according to the first embodiment described above, as well as the CGL according to the second and third embodiments. Further, each process in the method of producing a steel sheet according to the first, second, and third embodiments is described in detail.

### [Payoff reel and apparatus from payoff reel to annealing furnace]

### [Process (A)]

Referring to FIG. 1 to FIG. 3, the payoff reel 10 uncoils the cold-rolled coil C to feed the cold-rolled steel sheet S. That is, in the process (A), the payoff reel 10 uncoils the cold-rolled coil C to feed the cold-rolled steel sheet S. The paid off cold-rolled steel sheet S passes through a welder 11, cleaning apparatus 12, and an entry-side looper 13, and is supplied to the annealing furnace 20. However, upstream apparatus between the payoff reel 10 and the annealing furnace 20 is not limited to the welder 11, the cleaning apparatus 12, and the entry-side looper 13, and may be any known or optional apparatus.

### [Annealing furnace]

### [Process (B)]

Referring to FIG. 1 to FIG. 3, the annealing furnace 20 passes therethrough and continuously anneals the cold-rolled steel sheet S. In the annealing furnace 20, the heating zone 22, the soaking zone 24, and the cooling zone 26 are disposed in this order from an upstream side in the sheet passing direction. The cold-rolled steel sheet S is annealed in the heating zone 22 and the soaking zone 24 in a reducing atmosphere containing hydrogen, while the cold-rolled steel sheet S is cooled in the cooling zone 26. In the process (B), the cold-rolled steel sheet S is continuously annealed by passing through the annealing furnace 20, where the heating zone 22, the soaking zone 24, and the cooling zone 26 are disposed in this order from upstream in the sheet passing direction. The cooling zone 26 may consist of a plurality of cooling zones. Further, a preheating zone may be upstream of the heating zone 22 in the sheet passing direction. The annealing furnace 20 of the CAL 100 illustrated in FIG. 1 preferably includes the overaging treatment zone 28 downstream of the cooling zone 26, but this is not required. In FIG. 1 to FIG. 3, each zone is illustrated as a vertical furnace, but are not limited to this and may each be a horizontal furnace. In the case of vertical furnaces, upper portions or lower portions of adjacent zones are connected through a throat (restriction portion).

### (Heating zone)

In the heating zone 22, the cold-rolled steel sheet S may be heated directly using a burner or indirectly using a radiant tube (RT) or an electric heater. Further, heating by induction heating, roller heating, electric resistance heating, direct current heating, salt bath heating, electron beam heating, and the like are also possible. Average temperature in the heating zone 22 is preferably 500 °C to 800 °C. To the heating zone 22, gas is flowed from the soaking zone 24, while at the same time reducing gas is separately supplied. As the reducing gas, H₂-N₂ mixed gas is typically used. Examples include a gas having a composition of H₂: 1 vol% to 35 vol%, with the balance being one or both of N₂ or Ar and inevitable impurity (dew point: about -60 °C).

### (Soaking zone)

In the soaking zone 24, the cold-rolled steel sheet S can be heated indirectly using a radiant tube (RT). Average temperature in the soaking zone 24 is preferably 600 °C to 950 °C. A reducing gas is supplied to the soaking zone 24. As the reducing gas, H₂-N₂ mixed gas is typically used. Examples include a gas having a composition of H₂: 1 vol% to 35 vol%, with the balance being one or both of N₂ or Ar and inevitable impurity (dew point: about -60 °C).

### (Cooling zone)

In the cooling zone 26, the cold-rolled steel sheet S is cooled by either gas, a mixture of gas and water, or water. At the stage where the cold-rolled steel sheet S leaves the annealing furnace 20, the cold-rolled steel sheet S is cooled to about 100 °C to 400 °C for CAL and 470 °C to 530 °C for CGL. The cooling zone 26 is provided with a plurality of cooling nozzles along the steel sheet conveyance path. The cooling nozzles are each a circular pipe having a length longer than steel sheet width as described in JP 2010-185101 A and are arranged so that the extension direction of the circular pipes is parallel to the transverse direction of the steel sheet. The circular pipes each have, at a site facing the steel sheet, a plurality of through holes at a defined interval along the extension direction, and water in the circular pipes is sprayed through the through holes to the steel sheet. The cooling nozzles are provided in pairs so as to oppose each other across the front and back surfaces of the steel sheet, and a plurality of pairs (for example, five pairs to ten pairs) of cooling nozzles are arranged at a defined interval along the steel sheet conveyance path, constituting one cooling zone. Further, preferably three to six cooling zones are arranged along the steel sheet conveyance path.

### (Overaging treatment zone)

Referring to FIG. 1, in the CAL 100, in the overaging treatment zone 28, the cold-rolled steel sheet S exiting the cooling zone 26 is subjected to at least one of the following treatments: isothermal holding, reheating, furnace cooling, or natural cooling, so that the cold-rolled steel sheet S is cooled to about 100 °C to 400 °C when exiting the annealing furnace 20.

### [Downstream line]

### [Process (C)]

Referring to FIG. 1 to FIG. 3, in the process (C), the cold-rolled steel sheet S discharged from the annealing furnace 20 is continuously passed through the downstream line 30. Referring to FIG. 1, the CAL 100 includes a delivery-side looper 35 and a temper rolling mill 36 as the downstream line 30. Referring to FIG. 2, the CGL 200 includes the hot-dip galvanizing bath 31, a gas wiping apparatus 32, the alloying furnace 33, a cooling apparatus 34, the delivery-side looper 35, and the temper rolling mill 36 as the downstream line 30. Referring to FIG. 3, the CGL 300 includes the hot-dip galvanizing bath 31, the gas wiping apparatus 32, the cooling apparatus 34, the delivery-side looper 35, and the temper rolling mill 36 as the downstream line 30. However, the downstream line 30 is not limited to these examples and may be any known or optional apparatus. For example, the downstream line 30 can include a tension leveler, chemical conversion treatment apparatus, surface conditioning apparatus, oiling apparatus, and inspection apparatus.

### (Hot-dip galvanizing bath)

### (Process (C-1))

Referring to FIG. 2 and FIG. 3, the hot-dip galvanizing bath 31 is disposed downstream of the annealing furnace 20 in the sheet passing direction, where the cold-rolled steel sheet S is dipped to apply a hot-dip galvanized coating onto the cold-rolled steel sheet S. That is, in the process (C-1), the cold-rolled steel sheet S is dipped into the hot-dip galvanizing bath 31 disposed downstream of the annealing furnace 20 in the sheet passing direction. A snout 29 connected to a downstream-most zone of the annealing furnace (the cooling zone 26 in FIG. 2 and FIG. 3) is a rectangular member with a cross-section perpendicular to the sheet passing direction that defines the space through which the cold-rolled steel sheet S passes. A leading end of the snout 29 is immersed in the hot-dip galvanizing bath 31, thereby connecting the annealing furnace 20 and the hot-dip galvanizing bath 31. The hot-dip galvanized coating may be applied with a usual method.

The coating weight of molten zinc on both sides of the cold-rolled steel sheet S can be adjusted by blowing gas on the cold-rolled steel sheet S from a pair of gas wiping apparatuses 32 arranged on both sides of the cold-rolled steel sheet S being pulled up from the hot-dip galvanizing bath 31.

### (Alloying furnace)

### (Process (C-2))

Referring to FIG. 2, the alloying furnace 33 is disposed downstream of the hot-dip galvanizing bath 31 and the gas wiping apparatus 32 in the sheet passing direction, and the cold-rolled steel sheet S is passed through the alloying furnace 33 to heat and alloy the hot-dip galvanized coating. That is, in the process (C-2), the cold-rolled steel sheet S is passed through the alloying furnace 33 disposed downstream of the hot-dip galvanizing bath 31 and the gas wiping apparatus 32 in the sheet passing direction to heat and alloy the hot-dip galvanized coating. The alloying treatment may be performed with a usual method. A heater in the alloying furnace 33 is not particularly limited, and examples include heating with high-temperature gas or induction heating. However, the alloying furnace 33 is optional in the CGL, and the alloying process is an optional process in the method of producing a steel sheet using the CGL.

### (Cooling apparatus)

Referring to FIG. 2 and FIG. 3, the cooling apparatus 34 is disposed downstream of the gas wiping apparatus 32 and the alloying furnace 33 in the sheet passing direction. The cold-rolled steel sheet S can be cooled by passing the cold-rolled steel sheet S to the cooling apparatus 34. The cooling apparatus 34 cools the cold-rolled steel sheet S by water cooling, air cooling, gas cooling, mist cooling, or the like.

### [Tension reel]

### [Process (D)]

Referring to FIG. 1 to FIG. 3, the cold-rolled steel sheet S that has passed through the downstream line 30 is finally coiled by the tension reel 50 as a coiling apparatus to become the product coil P.

### [Magnetic field applying apparatus and magnetic field applying process]

It is essential that the CAL 100 according to the first embodiment, the CGL 200 according to the second embodiment, and the CGL 300 according to the third embodiment described above include a magnetic field applying apparatus 60 that applies a steady magnetic field along the sheet transverse direction of the cold-rolled steel sheet S to the cold-rolled steel sheet S being passed from the cooling zone 26 to the tension reel 50. That is, it is essential that the method of producing a steel sheet according to the first, second, and third embodiments includes, in a period from the process (B-2) and prior to the process (D), a magnetic field applying process of applying a steady magnetic field along the sheet transverse direction of the cold-rolled steel sheet S to the cold-rolled steel sheet S being passed. Accordingly, hydrogen content in the cold-rolled steel sheet S may be decreased sufficiently efficiently during annealing, and a steel sheet having excellent hydrogen embrittlement resistance may be produced. Further, the application of the steady magnetic field is integrated into the production process (in-line) of a steel sheet by the CALICO, the CGL 200 or the CGL 300, and therefore production efficiency is not compromised. Further, hydrogen is desorbed by the application of a steady magnetic field rather than by heating, and therefore there is also no concern that mechanical properties of the steel sheet are altered.

### (Magnetic field applying apparatus 60)

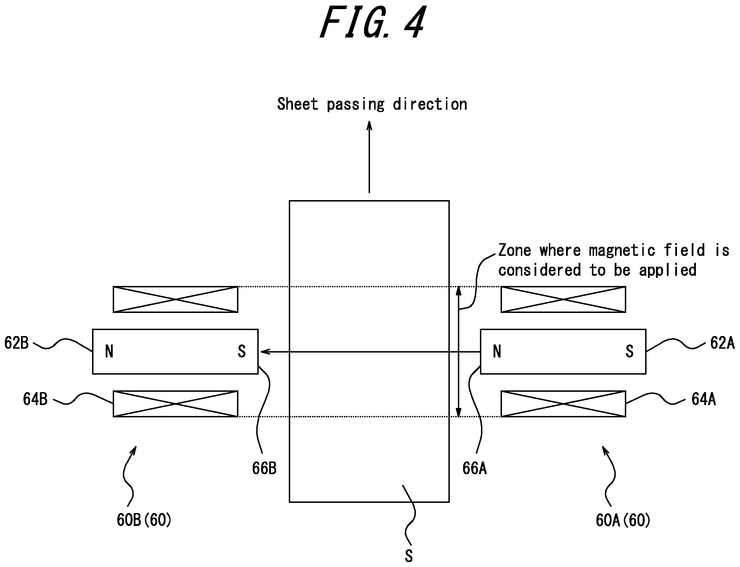

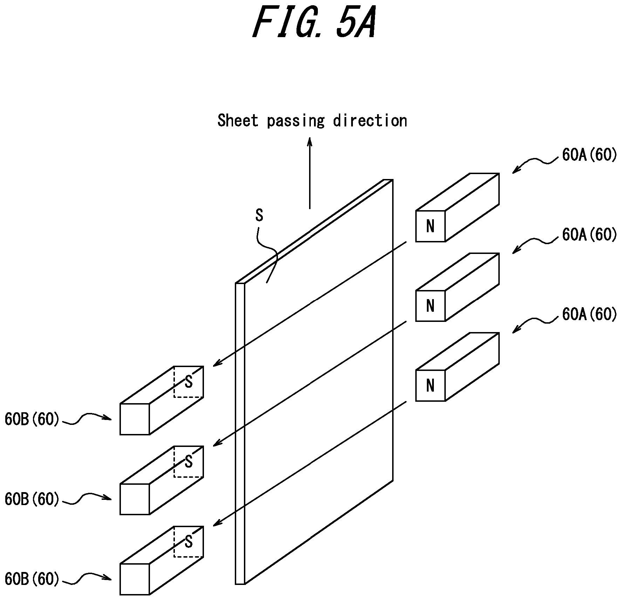

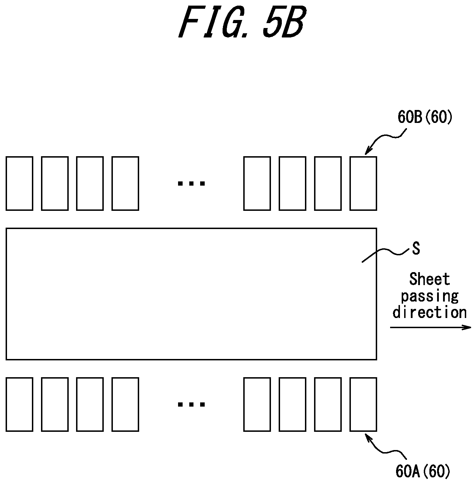

Each embodiment of the present disclosure can be realized by disposing the magnetic field applying apparatus 60 illustrated in FIG. 4, FIG. 5A, and FIG. 5B in the CAL 100, the CGL 200 or the CGL 300, and the magnetic field applying process applies a steady magnetic field to the cold-rolled steel sheet S being passed, using the magnetic field applying apparatus 60. Referring to FIG. 4, the magnetic field applying apparatus 60 includes a pair of electromagnets 60A, 60B, disposed outside transverse direction edges of the cold-rolled steel sheet S. The electromagnets 60A, 60B respectively include iron cores 62A, 62B, coils 64A, 64B wound around the iron cores 62A, 62B, and a driving power source (not illustrated) to pass current through the coils 64A, 64B. By turning on the driving power source and applying a continuous direct current to the coils 64A, 64B, the electromagnets 60A, 60B can be magnetized to generate a steady magnetic field. The axial direction of the coils 64A, 64B coincides with the sheet transverse direction of the cold-rolled steel sheet S. The pair of electromagnets 60A, 60B respectively have magnetic pole faces 66A, 66B that face transverse direction edge surfaces of the cold-rolled steel sheet S from a defined distance. By controlling the direction of the current flowing in the coils 64A, 64B, the magnetic pole face 66A can be the N pole and the magnetic pole face 66B can be the S pole. The pair of the magnetic pole faces 66A, 66B are at the same position along the sheet passing direction of the cold-rolled steel sheet S and oppose each other across the cold-rolled steel sheet S. Therefore, as illustrated in FIG. 4, the steady magnetic field generated by the pair of the electromagnets 60A, 60B has a main flux going from the magnetic pole face 66A (N pole) to the magnetic pole face 66B (S pole), the direction of which matches the transverse direction of the cold-rolled steel sheet S. This allows the application of a uniform steady magnetic field along the sheet transverse direction of the cold-rolled steel sheet S. As illustrated in FIG. 5A and FIG. 5B, by arranging a plurality of such pairs of the electromagnets 60A, 60B along the sheet passing direction, sufficient time can be secured to apply a magnetic field to the cold-rolled steel sheet S. According to the present disclosure, "continuous direct current" means a DC in which current value is maintained continuously (preferably constantly) rather than pulse-like. Further, the term "steady magnetic field" as used herein means a magnetic field that is not pulsed but is continuously maintained, and includes the magnetic field formed by a stationary magnet and the magnetic field formed by an electromagnet supplied with a continuous direct current.

It is important to apply a steady magnetic field, not a pulsed magnetic field, to the cold-rolled steel sheet S. In a pulsed magnetic field, expansion of lattice spacing of the steel sheet due to the magnetostriction effect is not sustained, and hydrogen cannot be efficiently desorbed from the cold-rolled steel sheet S. Further, it is important to apply a magnetic field along the sheet transverse direction of the cold-rolled steel sheet S. For example, when a magnetic field is applied along the thickness direction of the cold-rolled steel sheet S, lattice spacing of the steel sheet expands along the thickness direction of the steel sheet. In such a case, hydrogen inside the steel sheet diffuses in the in-plane direction of the steel sheet and can desorb from the transverse direction edge surface of the steel sheet. However, the area of the transverse direction end surface of the steel sheet is very small, and therefore sufficient hydrogen desorption cannot be achieved. In contrast, when a magnetic field is applied along the sheet transverse direction of the cold-rolled steel sheet S, the lattice spacing of the steel sheet expands in a main surface (front and back) direction of the steel sheet, along the sheet transverse direction. As a result, hydrogen in the steel sheet diffuses toward the main surfaces (front and back) of the steel sheet, which have a large surface area, and desorbs from the main surfaces. Therefore, a sufficient hydrogen desorption effect may be obtained.

The disposition of the pair of the electromagnets 60A, 60B is preferred as described above, but the disposition is not limited as long as a steady magnetic field having a magnetic flux component in the sheet transverse direction of the cold-rolled steel sheet S is generated. Further, configuration of the magnetic field applying apparatus 60 is not limited to the pair of the electromagnets 60A, 60B described above as long as a steady magnetic field having a magnetic flux component in the sheet transverse direction of the cold-rolled steel sheet S is generated. For example, the magnetic field applying apparatus 60 may be only the electromagnet 60A or only the electromagnet 60B. When the magnetic field formed by one of the electromagnets is strong enough to apply a magnetic field along the sheet transverse direction to the entire width of the cold-rolled steel sheet S, a configuration including only one of the electromagnets may be used.

According to the first, second, and third embodiments, the position of the magnetic field applying apparatus 60 is not limited as long as the magnetic field can be applied to the cold-rolled steel sheet S being passed from the cooling zone 26 to the tension reel 50.

Referring to FIG. 1, a suitable position of the magnetic field applying apparatus 60 is explained, that is, suitable timing of the magnetic field applying process, according to the first embodiment of producing a product coil of a cold-rolled annealed steel sheet (CR) in the CAL 100 is explained. As an example, the magnetic field applying apparatus 60 may be provided to the cooling zone 26. In such a case, the magnetic field applying process may be performed in the process (B-2). The entire magnetic field applying apparatus 60 need not be disposed inside the cooling zone 26, but at least the electromagnets 60A, 60B may be disposed inside the cooling zone 26.

As another example, the magnetic field applying apparatus 60 may be disposed in a position that allows applying a magnetic field to the cold-rolled steel sheet S being passed through the downstream line 30. In such a case, the magnetic field applying process may be performed in the process (C). Specifically, the magnetic field applying apparatus 60 may be disposed in at least one location selected from (i) between the overaging treatment zone 28 and the delivery-side looper 35, (ii) in the delivery-side looper 35, (iii) between the delivery-side looper 35 and the temper rolling mill 36, and (iv) between the temper rolling mill 36 and the tension reel 50.

The magnetic field applying apparatus 60 may be disposed both in the cooling zone 26 and at a location where a magnetic field can be applied to the cold-rolled steel sheet S being passed through the downstream line 30. That is, the magnetic field applying process may be performed in both the process (B-2) and the process (C). The magnetic field applying apparatus 60 may be disposed in the overaging treatment zone 28, and the magnetic field applying process may be performed during the overaging treatment.

Referring to FIG. 2, a suitable position of the magnetic field applying apparatus 60 is explained, that is, suitable timing of the magnetic field applying process, according to the second embodiment of producing galvannealed steel sheet (GA) products in the CGL 200 is explained. As an example, the magnetic field applying apparatus 60 may be disposed in a first position that allows applying a magnetic field to the cold-rolled steel sheet S being passed upstream from the hot-dip galvanizing bath 31. In such a case, the magnetic field applying process may be performed prior to the process (C-1). Specifically, the magnetic field applying apparatus 60 may be provided to the cooling zone 26. Further, the entire magnetic field applying apparatus 60 need not be disposed inside the cooling zone 26, but at least the electromagnets 60A, 60B may be disposed inside the cooling zone 26. Further, at least the electromagnets 60A, 60B of the magnetic field applying apparatus 60 may be disposed in the snout 29.

As another example, the magnetic field applying apparatus 60 may be disposed in a second position that allows applying a magnetic field to the cold-rolled steel sheet S being passed downstream from the hot-dip galvanizing bath 31. In such a case, the magnetic field applying process may be performed after the process (C-1). Specifically, the magnetic field applying apparatus 60 may be disposed in at least one location selected from (i) between the hot-dip galvanizing bath 31 and the gas wiping apparatus 32, (ii) between the gas wiping apparatus 32 and the alloying furnace 33, (iii) in the alloying furnace 33, (iv) in an air cooling zone between the alloying furnace 33 and the cooling apparatus 34, (v) between the cooling apparatus 34 and the delivery-side looper 35, (vi) in the delivery-side looper 35, (vii) between the delivery-side looper 35 and the temper rolling mill 36, and (viii) between the temper rolling mill 36 and the tension reel 50. In particular, the magnetic field applying apparatus 60 is preferably provided to (iv) the air cooling zone.

From the viewpoint of more sufficiently desorbing hydrogen from the steel sheet, the magnetic field applying apparatus 60 is preferably disposed in the first position rather than the second position. That is, the magnetic field applying process is preferably performed prior to the process (C-1) rather than after the process (C-1). However, the magnetic field applying apparatus 60 may be disposed in both the first position and the second position. That is, the magnetic field applying process may be performed both prior to and after the process (C-1).

Referring to FIG. 3, a suitable position of the magnetic field applying apparatus 60 is explained, that is, suitable timing of the magnetic field applying process, according to the third embodiment of producing hot-dip galvanized steel sheet (GI) products in the CGL 300 is explained. As an example, the magnetic field applying apparatus 60 may be disposed in a first position that allows applying a magnetic field to the cold-rolled steel sheet S being passed upstream from the hot-dip galvanizing bath 31. In such a case, the magnetic field applying process may be performed prior to the process (C-1). Specifically, the magnetic field applying apparatus 60 may be provided to the cooling zone 26. Further, the entire magnetic field applying apparatus 60 need not be disposed inside the cooling zone 26, but at least the electromagnets 60A, 60B may be disposed inside the cooling zone 26. Further, at least the electromagnets 60A, 60B of the magnetic field applying apparatus 60 may be disposed in the snout 29.

As another example, the magnetic field applying apparatus 60 may be disposed in a second position that allows applying a magnetic field to the cold-rolled steel sheet S being passed downstream from the hot-dip galvanizing bath 31. In such a case, the magnetic field applying process may be performed after the process (C-1). Specifically, the magnetic field applying apparatus 60 may be disposed in at least one location selected from (i) between the hot-dip galvanizing bath 31 and the gas wiping apparatus 32, (ii) in an air cooling zone between the gas wiping apparatus 32 and the cooling apparatus 34, (iii) between the cooling apparatus 34 and the delivery-side looper 35, (iv) in the delivery-side looper 35, (v) between the delivery-side looper 35 and the temper rolling mill 36, and (vi) between the temper rolling mill 36 and the tension reel 50. In particular, the magnetic field applying apparatus 60 is preferably provided to (ii) the air cooling zone.

From the viewpoint of more sufficiently desorbing hydrogen from the steel sheet, the magnetic field applying apparatus 60 is preferably disposed in the first position rather than the second position. That is, the magnetic field applying process is preferably performed prior to the process (C-1) rather than after the process (C-1). However, the magnetic field applying apparatus 60 may be disposed in both the first position and the second position. That is, the magnetic field applying process may be performed both prior to and after the process (C-1).

### (Magnetic flux density)

From the viewpoint of promoting hydrogen diffusion and sufficiently desorbing hydrogen content in the cold-rolled steel sheet S, the magnetic flux density of the cold-rolled steel sheet S to the sheet transverse direction is preferably 0.1 T or more. The magnetic flux density is more preferably 0.2 T or more. The magnetic flux density is even more preferably 0.5 T or more. On the other hand, considering the performance of typical magnetic field applying apparatus, the magnetic flux density to the sheet transverse direction of the cold-rolled steel sheet S is preferably 15 T or less. The magnetic flux density is more preferably 14 T or less. The magnetic flux density to the sheet transverse direction of the cold-rolled steel sheet S can be adjusted by adjusting the number of coil turns and current value. Here, "magnetic flux density to the sheet transverse direction of the cold-rolled steel sheet S" can be measured in-line by installing a Tesla meter in the vicinity of a transverse direction edge of the cold-rolled steel sheet S being passed, and in the vicinity of a magnetic field generating surface of the magnetic field applying apparatus 60. Alternatively, once the number of coil turns in the magnetic field applying apparatus 60 and the magnitude of the current value are determined, "magnetic flux density to the sheet transverse direction of the cold-rolled steel sheet S" can be determined off-line in advance.

### (Magnetic field application time)

From the viewpoint of decreasing hydrogen content from the cold-rolled steel sheet S more sufficiently, in the magnetic field applying process, application time of a magnetic field to the cold-rolled steel sheet S is preferably 1 s or more. Application time of a magnetic field is more preferably 5 s or more. Application time of a magnetic field is even more preferably 10 s or more. On the other hand, from the viewpoint of not interfering with productivity, application time of a magnetic field to the cold-rolled steel sheet S is preferably 3600 s or less. Application time of a magnetic field is more preferably 1800 s or less. Application time of a magnetic field is even more preferably 900 s or less. Hereinafter, "application time of a magnetic field to the cold-rolled steel sheet S" means the time for which a magnetic field is applied to each position of the cold-rolled steel sheet S in the sheet transverse direction, and when each position is subjected to a magnetic field from a plurality of the magnetic field applying apparatus 60, means the cumulative time. Referring to FIG. 4, when a pair of the electromagnets 60A, 60B is used, a portion of the cold-rolled steel sheet S opposite the pair of the electromagnets 60A, 60B can be regarded as having a magnetic field applied thereto. Therefore, the cumulative time that each position of the cold-rolled steel sheet S is opposite a pair of the electromagnets 60A, 60B can be used as a magnetic field application time. The magnetic field application time can be adjusted according to sheet passing speed of the cold-rolled steel sheet S and the position of the magnetic field applying apparatus 60 (for example, as illustrated in FIG. 4, the number of pairs of the electromagnets 60A, 60B along the sheet passing direction).

### [Cold-rolled steel sheet]

The cold-rolled steel sheet S supplied to the CAL 100, the CGL 200, and the CGL 300 is not particularly limited according to the present embodiments. The cold-rolled steel sheet S preferably has a thickness of less than 6 mm. Examples include a high strength steel sheet having a tensile strength of 590 MPa or more, or a stainless steel sheet.

### [Chemical composition of cold-rolled steel sheet: high strength steel sheet]

The following describes chemical composition when the cold-rolled steel sheet S is a high strength steel sheet. Hereinafter, "mass%" is simply noted as "%".

### C: 0.030 % to 0.800 %

C has an effect of increasing strength of steel sheets. From the viewpoint of obtaining this effect, C content is 0.030 % or more. The C content is preferably 0.080 % or more. However, when the C content is excessive, steel sheets become significantly embrittled, regardless of hydrogen content. Therefore, the C content is 0.800 % or less. The C content is preferably 0.500 % or less.

### Si: 0.01 % to 3.00 %

Si has an effect of increasing steel sheet strength. From the viewpoint of obtaining this effect, Si content is 0.01 % or more. The Si content is preferably 0.10 % or more. However, when the Si content is excessive, steel sheets become brittle and ductility decreases, surface characteristics deteriorate due to red scale and the like, and coating quality deteriorates. The Si content is therefore 3.00 % or less. The Si content is preferably 2.50 % or less.

### Mn: 0.01 % to 10.00 %

Mn has an effect of increasing steel sheet strength through solid solution strengthening. From the viewpoint of obtaining this effect, Mn content is 0.01 % or more. The Mn content is preferably 0.5 % or more. However, when the Mn content is excessive, steel microstructure tends to become uneven due to Mn segregation, and hydrogen embrittlement may become apparent with such unevenness as initiation points. The Mn content is therefore 10.00 % or less. The Mn content is preferably 8.00 % or less.

### P: 0.001 % to 0.100 %

P is an element that has a solid solution strengthening effect and can be added depending on desired strength. From the viewpoint of obtaining these effects, P content is 0.001 % or more. The P content is preferably 0.003 % or more. However, when the P content is excessive, weldability degrades and, in the case of alloying a galvanized coating, decreases the alloying rate, which impairs the quality of the galvanized coating. The P content is therefore 0.100 % or less. The P content is preferably 0.050 % or less.

### S: 0.0001 % to 0.0200 %

S segregates to grain boundaries, makes steel brittle during hot working, and forms sulfides to decrease local deformability. S content is therefore 0.0200 % or less. The S content is preferably 0.0100 % or less. The S content is more preferably 0.0050 % or less. On the other hand, in view of production technology constraints, the S content is 0.0001 % or more.

### N: 0.0005 % to 0.0100 %

N is an element that degrades steel anti-aging properties. The N content is therefore 0.0100 % or less. The N content is preferably 0.0070 % or less. The lower the N content, the better, but in view of production technology constraints, the N content is 0.0005 % or more. The N content is preferably 0.0010 % or more.

### Al: 0.001 % to 2.000 %

Al acts as a deoxidizer and is an effective element for steel cleanliness. From the viewpoint of obtaining these effects, Al content is 0.001 % or more. The Al content is preferably 0.010 % or more. However, when the Al content is excessive, slab cracking may occur during continuous casting. The Al content is therefore 2.000 % or less. The Al content is preferably 1.200 % or less.

The balance other than the above components is Fe and inevitable impurity. However, the chemical composition may optionally contain at least one element selected from the following.

### Ti: 0.200 % or less

Ti contributes to steel sheet strength increase through steel strengthening by precipitation and fine grain strengthening through ferrite crystal grain growth inhibition. Accordingly, when Ti is added, Ti content is preferably 0.005 % or more. The Ti content is more preferably 0.010 % or more. However, when the Ti content is excessive, a large amount of carbonitride may precipitate, resulting in poor formability. Accordingly, when Ti is added, the Ti content is 0.200 % or less. The Ti content is preferably 0.100 % or less.

### Nb: 0.200 % or less, V: 0.500 % or less, W: 0.500 % or less

Nb, V, and W are effective for steel strengthening by precipitation. Accordingly, when Nb, V, and W are added, the content of each element is preferably 0.005 % or more. The content of each element is more preferably 0.010 % or more. However, when the content of any of these elements is excessive, a large amount of carbonitride may precipitate, resulting in poor formability. Accordingly, when Nb is added, Nb content is 0.200 % or less. The Nb content is preferably 0.100 % or less. When V and W are added, the content of each element is 0.500 % or less. The content of each element is preferably 0.300 % or less.

### B: 0.0050 % or less

B is effective in grain boundary strengthening and increasing steel sheet strength. Accordingly, when B is added, B content is preferably 0.0003 % or more. However, when the B content is excessive, formability may decrease. Accordingly, when B is added, the B content is 0.0050 % or less. The B content is preferably 0.0030 % or less.

### Ni: 1.000 % or less

Ni is an element that increases steel strength through solid solution strengthening. Accordingly, when Ni is added, Ni content is preferably 0.005 % or more. However, when the Ni content is excessive, the area fraction of hard martensite may increase excessively, which may lead to an increase in microvoids at martensite crystal grain boundaries during tensile testing, as well as promoting crack propagation, resulting in decreased ductility. Accordingly, when Ni is added, the Ni content is 1.000 % or less.

### Cr: 1.000 % or less, Mo: 1.000 % or less

Cr and Mo act to improve the balance between strength and formability. Accordingly, when Cr and Mo are added, content of each element is preferably 0.005 % or more. However, when the content of either element is excessive, the area fraction of hard martensite may increase excessively, which may lead to an increase in microvoids at martensite crystal grain boundaries during tensile testing, as well as promoting crack propagation, resulting in decreased ductility. Accordingly, when Cr and Mo are added, the content of each element is 1.000 % or less.

### Cu: 1.000 % or less

Cu is an element that is effective for strengthening steel. Accordingly, when Cu is added, Cu content is preferably 0.005 % or more. However, when the Cu content is excessive, the area fraction of hard martensite may increase excessively, which may lead to an increase in microvoids at tempered martensite crystal grain boundaries during tensile testing, as well as promoting crack propagation, resulting in decreased ductility. Accordingly, when Cu is added, the Cu content is 1.000 % or less.

### Sn: 0.200 % or less, Sb: 0.200 % or less

Sn and Sb are effective in suppressing decarburization in a region of some tens of µm in a steel sheet surface layer caused by nitriding and oxidation at the steel sheet surface, and in securing strength and stability as a material. Accordingly, when Sn and Sb are added, the content of each element is preferably 0.002 % or more. However, when either content is excessive, toughness may decrease. Accordingly, when Sn and Sb are added, the content of each element is 0.200 % or less.

### Ta: 0.100 % or less

Ta, like Ti and Nb, forms alloy carbides or alloy carbonitrides, and contributes to increasing steel strength. In addition, it is believed that Ta has an effect of significantly inhibiting coarsening of precipitates when partially dissolved in Nb carbides or Nb carbonitrides to form complex precipitates such as (Nb, Ta) (C, N), and of stabilizing a contribution to strength through strengthening by precipitation. Accordingly, when Ta is added, Ta content is preferably 0.001 % or more. However, excessive addition of Ta may saturate the precipitate stabilization effect, and increases alloy cost. Accordingly, when Ta is added, the Ta content is 0.100 % or less.

### Ca: 0.0050 % or less, Mg: 0.0050 % or less, Zr: 0.1000 % or less, rare earth metals (REM): 0.0050 % or less

Ca, Mg, Zr, and REM are effective elements for spheroidizing the shape of sulfides and mitigating the adverse effects of sulfides on formability. Accordingly, when these elements are added, the content of each element is preferably 0.0005 % or more. However, when the content of any of these elements is excessive, inclusions and the like may increase and surface and internal defects may occur. Accordingly, when these elements are added, the content of each element is 0.0050 % or less.

### [Chemical composition of cold-rolled steel sheet: stainless steel sheet]

The following describes chemical composition when the cold-rolled steel sheet S is a stainless steel sheet. Hereinafter, "mass%" is simply noted as "%".

### C: 0.001 % to 0.400 %

C is an essential element for obtaining high strength in stainless steel. However, during tempering in steel production, C combines with Cr and precipitates as carbides, which degrade steel corrosion resistance and toughness. When C content is less than 0.001 %, sufficient strength cannot be obtained. When the C content exceeds 0.400 %, the degradation described above becomes more pronounced. The C content is therefore 0.001 % to 0.400 %.

### Si: 0.01 % to 2.00 %

Si is a useful element as a deoxidizer. From the viewpoint of obtaining this effect, Si content is 0.01 % or more. However, when the Si content is excessive, the solute Si in steel decreases steel workability. The Si content is therefore 2.00 % or less.

### Mn: 0.01 % to 5.00 %

Mn has an effect of increasing steel strength. To obtain this effect, Mn content is 0.01 % or more. However, when the Mn content is excessive, steel workability decreases. The Mn content is therefore 5.00 % or less.

### P: 0.001 % to 0.100 %

P is an element that contributes to intergranular fracture due to grain boundary segregation. Accordingly, the lower the P content, the better. The P content is 0.100 % or less. The P content is preferably 0.030 % or less. The P content is more preferably 0.020 % or less. On the other hand, in view of production technology constraints, the P content is 0.001 % or more.

### S: 0.0001 % to 0.0200 %

S is present as sulfide inclusions such as MnS, which decrease ductility, corrosion resistance, and the like. Accordingly, the lower the S content, the better. The S content is 0.0200 % or less. The S content is preferably 0.0100 % or less. The S content is more preferably 0.0050 % or less. On the other hand, in view of production technology constraints, the S content is 0.0001 % or more.

### Cr: 9.0 % to 28.0 %

Cr is a basic element of stainless steel and is also an important element for corrosion resistance. When considering corrosion resistance in severe environments of 180 °C or more, Cr content of less than 9.0 % does not provide sufficient corrosion resistance, while Cr content exceeding 28.0 % saturates the effect and causes problems in terms of economic efficiency. The Cr content is therefore 9.0 % to 28.0 %.

### Ni: 0.01 % to 40.0 %

Ni is an element that improves stainless steel corrosion resistance. When Ni content is less than 0.01 %, the effect is not sufficiently realized. On the other hand, when the Ni content is excessive, formability degrades and susceptibility to stress corrosion cracking increases. The Ni content is therefore 0.01 % to 40.0 %.

### N: 0.0005 % to 0.500 %

N is a detrimental element to stainless steel corrosion resistance. The N content is therefore 0.500 % or less. The N content is preferably 0.200 % or less. The lower the N content, the better, but in view of production technology constraints, the N content is 0.0005 % or more.

### Al: 0.001 % to 3.000 %

Al acts as a deoxidizer and also suppresses separation of oxide scale. From the viewpoint of obtaining these effects, Al content is 0.001 % or more. However, when the Al content is excessive, elongation decreases and surface quality degrades. The Al content is therefore 3.000 % or less.

The balance other than the above components is Fe and inevitable impurity. However, the chemical composition may optionally contain at least one element selected from the following.

### Ti: 0.500 % or less

Ti combines with C, N, and S to improve corrosion resistance, intergranular corrosion resistance, and depth drawability. However, when Ti content exceeds 0.500 %, toughness degrades due to solute Ti. Accordingly, when Ti is added, the Ti content is 0.500 % or less.

### Nb: 0.500 % or less

Nb, like Ti, combines with C, N, and S to improve corrosion resistance, intergranular corrosion resistance, and depth drawability. Further, in addition to improving workability and high-temperature strength, Nb also inhibits crevice corrosion and promotes repassivation. However, excessive addition leads to hardening and degrades formability. Accordingly, when Nb is added, Nb content is 0.500 % or less.

### V: 0.500 % or less

V suppresses crevice corrosion. However, excessive addition degrades formability. Accordingly, when V is added, V content is 0.500 % or less.

### W: 2.000 % or less

W contributes to improving corrosion resistance and high-temperature strength. However, excessive addition leads to toughness degradation and cost increase during steel sheet production. Accordingly, when W is added, W content is 2.000 % or less.

### B: 0.0050 % or less

B improves secondary workability of the product by segregation at grain boundaries. However, excessive addition decreases workability and corrosion resistance. Accordingly, when B is added, B content is 0.0050 % or less.

### Mo: 2.000 % or less

Mo is an element that improves corrosion resistance, in particular suppressing crevice corrosion. However, excessive addition degrades formability. Accordingly, when Mo is added, Mo content is 2.000 % or less.

### Cu: 3.000 % or less

Cu, like Ni and Mn, is an austenite-stabilizing element and is effective in crystal grain refinement through phase transformation. Further, Cu suppresses crevice corrosion and promotes repassivation. However, excessive addition degrades toughness and formability. Accordingly, when Cu is added, Cu content is 3.000 % or less.

### Sn: 0.500 % or less

Sn contributes to improving corrosion resistance and high-temperature strength. However, excessive addition may cause slab cracking during steel sheet production. Accordingly, when Sn is added, Sn content is 0.500 % or less.

### Sb: 0.200 % or less

Sb segregates at grain boundaries and acts to increase high-temperature strength. However, excessive addition may cause cracking during welding due to Sb segregation. Accordingly, when Sb is added, Sb content is 0.200 % or less.

### Ta: 0.100 % or less

Ta combines with C and N to improve toughness. However, excessive addition saturates the effect and leads to increased production costs. Accordingly, when Ta is added, Ta content is 0.100 % or less.

### Ca: 0.0050 % or less, Mg: 0.0050 % or less, Zr: 0.1000 % or less, rare earth metals (REM): 0.0050 % or less

Ca, Mg, Zr, and REM are effective elements for spheroidizing the shape of sulfides and mitigating the adverse effects of sulfides on formability. Accordingly, when these elements are added, the content of each element is preferably 0.0005 % or more. However, when the content of any of these elements is excessive, inclusions and the like may increase and surface and internal defects may occur. Accordingly, when these elements are added, the content of each element is 0.0050 % or less.

### [Diffusible hydrogen content]

According to the present embodiment, to secure good ductility, diffusible hydrogen content in a product coil is preferably 0.50 mass ppm or less. Diffusible hydrogen content in a product coil is more preferably 0.30 mass ppm or less. Diffusible hydrogen content in a product coil is even more preferably 0.20 mass ppm or less. A lower limit of diffusible hydrogen content in a product coil is not particularly specified. In view of production technology constraints, diffusible hydrogen content in a product coil may be 0.01 mass ppm or more.

Here, a method of measuring diffusible hydrogen content of a product coil is as follows. A test piece 30 mm long and 5 mm wide is taken from the product coil. For a product coil of a hot-dip galvanized steel sheet or a galvannealed steel sheet, the hot-dip galvanized layer or the galvannealed layer of the test piece is removed by grinding or alkali. Hydrogen content released from the test piece is then measured by thermal desorption spectrometry (TDS). Specifically, the test piece is continuously heated from room temperature to 300 °C at a heating rate of 200 °C/h, then cooled to room temperature, and a cumulative hydrogen amount released from the test piece from room temperature to 210 °C is measured to determine the diffusible hydrogen content of the product coil.

### EXAMPLES

Steels having chemical compositions containing the elements listed in Table 1, each with the balance consisting of Fe and inevitable impurity, were prepared by steelmaking in a converter and formed into slabs by continuous casting. The resulting slabs were hot rolled and cold rolled to obtain cold rolled coils. As indicated in Table 2, for some examples, product coils of cold-rolled annealed steel sheets (CR) were produced by the CAL illustrated in FIG. 1, for some examples, product coils of hot-dip galvanized steel sheets (GI) were produced without heat alloying by the CGL illustrated in FIG. 2, and for remaining examples, product coils of galvannealed steel sheets (GA) were produced by the CGL illustrated in FIG. 2.

For each example, a steady magnetic field was applied along the sheet transverse direction of the cold-rolled steel sheet to the cold-rolled steel sheet being passed, using the magnetic field applying apparatus illustrated in FIG. 4, FIG. 5A, and FIG. 5B, under a set of conditions including a magnetic flux density (in the sheet transverse direction) and a magnetic field application time listed in Table 2. The "magnetic field application location" in Table 2 indicates a location where the magnetic field applying process was performed in the CAL or the CGL, that is, where the magnetic field applying apparatus was disposed.

"(B-2)" means that in the CAL and the CGL, the magnetic field applying apparatus was disposed in the cooling zone and the magnetic field applying process was performed in the cooling zone in process (B-2).

"(C)" means that in the CAL, the magnetic field applying apparatus was disposed at a location to apply a magnetic field to the cold-rolled steel sheet being passed by the downstream line, downstream from the cooling zone and upstream from the tension reel, and specifically in at least one location selected from (i) between the overaging treatment zone 28 and the delivery-side looper 35, (ii) in the delivery-side looper 35, (iii) between the delivery-side looper 35 and the temper rolling mill 36, and (iv) between the temper rolling mill 36 and the tension reel 50. That is, "(C)" means that in the CAL, the magnetic field applying process was performed in the process (C) and specifically in at least one of the locations (i) through (iv) described above.

"Prior to (C-1)" means that in the CGL, the magnetic field applying apparatus was disposed at a location downstream from the cooling zone and upstream from the hot-dip galvanizing bath, and specifically at the snout 29, and that the magnetic field applying process was performed after the process (B-2) but prior to the process (C-1).

"After (C-1)" means that in the CGL, the magnetic field applying apparatus was disposed at a location downstream from the hot-dip galvanizing bath and upstream from the tension reel, and specifically in at least one location selected from (i) between the hot-dip galvanizing bath 31 and the gas wiping apparatus 32, (ii) between the gas wiping apparatus 32 and the alloying furnace 33, (iii) in the alloying furnace 33, (iv) in the air cooling zone between the alloying furnace 33 and the cooling apparatus 34, (v) between the cooling apparatus 34 and the delivery-side looper 35, (vi) in the delivery-side looper 35, (vii) between the delivery-side looper 35 and the temper rolling mill 36, (viii) between the temper rolling mill 36 and the tension reel 50. Further, the magnetic field applying process was performed after the process (C-1) and specifically in at least one of the locations (i) through (viii) described above.

Samples of steel sheets were taken from product coils obtained according to each standard and evaluated for tensile properties and hydrogen embrittlement resistance as follows, the results of which are listed in Table 2.

Tensile tests were conducted in accordance with Japanese Industrial Standard JIS Z 2241 (2011) using a JIS No. 5 test piece taken so that the tensile direction was perpendicular to the rolling direction of the steel sheet, and tensile strength (TS) and total elongation (EL) were measured.

Hydrogen embrittlement resistance was evaluated from the above tensile test as follows. When EL of a steel sheet after application of the magnetic field, measured as described above, was divided by EL' for the same steel sheet having 0.00 mass ppm hydrogen content in the steel, hydrogen embrittlement resistance was judged to be good when the value was 0.70 or more. EL' was measured by leaving the same steel sheet in air for a long time to decrease hydrogen in the steel, and then confirming by TDS that the hydrogen content in the steel had decreased to 0.00 mass ppm prior to performing a tensile test.

Diffusible hydrogen content of product coils obtained for each standard was measured by the method previously described, and the results are listed in Table 2.

According to the Examples, the magnetic field applying process was used, and therefore steel sheets having excellent hydrogen embrittlement resistance were produced.

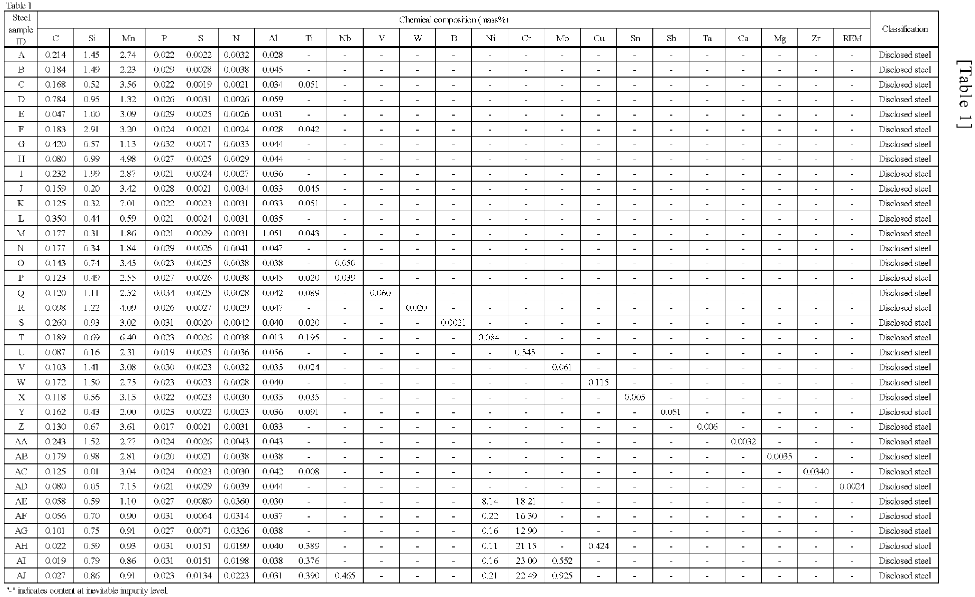

### [Table 2]

**Table 2**

| No. | Steel sample ID | Magnetic field application location | Magnetic flux density (T) | Magnetic field application time (s) | Product coil ¹⁾ | TS | EL | EL' | Hydrogen embrittlement resistance EL/EL' | Diffusible hydrogen content | Classification |
|---|---|---|---|---|---|---|---|---|---|---|---|
| | | | | | | (MPa) | (%) | (%) | | (mass ppm) | |
| 1 | A | (B-2) | 1.01 | 60 | GA | 1517 | 9.2 | 9.5 | 0.97 | 0.12 | Example |
| 2 | B | after (C-1) | 1.22 | 90 | GA | 1019 | 22.3 | 24.9 | 0.90 | 0.31 | Example |
| 3 | C | (B-2) | 0.35 | 90 | CR | 1005 | 24.3 | 26.1 | 0.93 | 0.31 | Example |
| 4 | D | (B-2) + prior to (C-1) + after (C-1) | 1.53 | 600 | GI | 2219 | 5.7 | 5.8 | 0.98 | 0.03 | Example |
| 5 | E | (B-2) | 0.85 | 90 | CR | 598 | 21.3 | 25.9 | 0.82 | 0.20 | Example |
| 6 | F | (B-2) | 0.14 | 90 | CR | 1053 | 10.9 | 14.1 | 0.77 | 0.40 | Example |
| 7 | G | (B-2) | 0.25 | 10 | GI | 1831 | 5.8 | 8.2 | 0.71 | 0.43 | Example |
| 8 | H | (B-2) | 1.00 | 60 | GA | 1175 | 9.4 | 10.3 | 0.91 | 0.15 | Example |
| 9 | I | (B-2) + prior to (C-1) | 1.35 | 240 | GI | 1526 | 20.7 | 21.1 | 0.98 | 0.01 | Example |
| 10 | J | (B-2) | 1.20 | 90 | GA | 1022 | 20.9 | 23.2 | 0.90 | 0.16 | Example |
| 11 | K | after (C-1) | 1.05 | 10 | GI | 1055 | 33.4 | 45.2 | 0.74 | 0.44 | Example |
| 12 | L | (B-2) + prior to (C-1) | 1.15 | 180 | GA | 982 | 18.1 | 19.0 | 0.95 | 0.04 | Example |
| 13 | M | (C) | 1.20 | 240 | CR | 778 | 23.9 | 24.0 | 1.00 | 0.01 | Example |
| 14 | N | (B-2) + after (C-1) | 0.90 | 60 | GI | 1338 | 11.0 | 12.4 | 0.89 | 0.33 | Example |
| 15 | O | prior to (C-1) | 1.00 | 30 | GI | 923 | 200 | 24.7 | 0.81 | 0.27 | Example |
| 16 | P | prior to (C-1) | 5.50 | 15 | GA | 1275 | 12.2 | 13.1 | 0.93 | 0.08 | Example |
| 17 | Q | prior to (C-1) + after (C-1) | 1.30 | 1200 | GI | 946 | 28.1 | 29.7 | 0.95 | 0.01 | Example |
| 18 | R | (B-2) + (C) | 200 | 300 | CR | 1158 | 12.5 | 13.7 | 0.91 | 0.18 | Example |
| 19 | S | after (C-1) | 0.85 | 120 | GA | 1483 | 10.5 | 12.5 | 0.84 | 0.36 | Example |
| 20 | T | prior to (C-1) | 0.24 | 5 | GI | 995 | 14.2 | 18.8 | 0.76 | 0.50 | Example |
| 21 | U | (B-2) + prior to (C-1) + after (C-1) | 0.70 | 300 | GA | 1320 | 120 | 12.7 | 0.94 | 0.16 | Example |
| 22 | V | prior to (C-1) | 0.90 | 15 | GA | 1301 | 10.8 | 12.9 | 0.84 | 0.32 | Example |
| 23 | W | (B-2) | 600 | 30 | GA | 1228 | 14.9 | 16.8 | 0.89 | 0.18 | Example |
| 24 | X | (B-2) | 1.15 | 60 | GI | 1495 | 9.5 | 10.2 | 0.93 | 0.16 | Example |
| 25 | Y | (B-2) + prior to (C-1) | 1200 | 45 | GA | 1531 | 12.1 | 12.4 | 0.98 | 0.07 | Example |
| 26 | Z | (B-2) | 1.25 | 120 | CR | 1040 | 14.0 | 14.6 | 0.96 | 0.05 | Example |
| 27 | AA | (B-2) | 3.00 | 30 | GA | 1562 | 15.2 | 16.2 | 0.94 | 0.13 | Example |
| 28 | AB | (C) | 1.00 | 90 | CR | 1008 | 23.0 | 27.8 | 0.83 | 0.20 | Example |
| 29 | AC | prior to (C-1) | 4.90 | 15 | GI | 1337 | 13.9 | 14.9 | 0.93 | 009 | Example |
| 30 | AD | (B-2) + prior to (C-1) | 0.80 | 120 | GA | 1330 | 12.1 | 14.3 | 0.85 | 0.27 | Example |
| 31 | AE | (B-2) + (C) | 1.30 | 450 | CR | 622 | 48.2 | 48.6 | 0.99 | 006 | Example |
| 32 | AF | (B-2) + (C) | 1.20 | 300 | CR | 598 | 27.6 | 28.2 | 0.98 | 0.07 | Example |
| 33 | AG | (B-2) | 1.10 | 150 | CR | 598 | 21.6 | 22.2 | 0.97 | 009 | Example |
| 34 | AH | (B-2) + (C) | 1.30 | 3000 | CR | 590 | 24.3 | 24.4 | 1.00 | 0.00 | Example |
| 35 | AI | (B-2) + (C) | 1.25 | 900 | CR | 588 | 23.0 | 23.6 | 0.97 | 002 | Example |
| 36 | AJ | (B-2) | 800 | 180 | CR | 594 | 20.9 | 21.2 | 0.99 | 0.00 | Example |
| 37 | A | - | - | - | CR | 1517 | 3.7 | 10.9 | 0.35 | 0.67 | Comparative Example |
| 38 | A | (B-2) | 0.18 | 300 | GA | 1269 | 7.6 | 10.5 | 0.72 | 0.30 | Example |
| 39 | A | (B-2) + prior to (C-1) | 0.12 | 360 | GA | 1314 | 8.3 | 9.9 | 0.84 | 0.16 | Example |
| 40 | A | (B-2) + prior to (C-1) | 1.54 | 150 | GA | 1284 | 10.0 | 10.3 | 0.97 | 0.01 | Example |
| 41 | A | (B-2) + prior to (C-1) + after (C-1) | 2.45 | 3200 | GI | 1585 | 9.9 | 10.1 | 0.99 | 002 | Example |

| | | | | | | | | | | | |
|---|---|---|---|---|---|---|---|---|---|---|---|
| 1) CR: cold-rolled steel sheet, GI: hot-dip galvanized steel sheet (without alloying treatment of galvanized coating), GA: galvannealed steel sheet Underlined: indicates outside scope of present disclosure. 1) CR: cold-rolled steel sheet, GI: hot-dip galvanized steel sheet (without alloying treatment of galvanized coating), GA: galvannealed steel sheet | | | | | | | | | | | |

### INDUSTRIAL APPLICABILITY

The continuous annealing line and the continuous hot-dip galvanizing line, as well as the method of producing a steel sheet, enable the production of a steel sheet having excellent hydrogen embrittlement resistance without compromising production efficiency and without changing mechanical properties of the steel sheet.

### REFERENCE SIGNS LIST

- 100: continuous annealing line
- 200: continuous hot-dip galvanizing line
- 300: continuous hot-dip galvanizing line
- 10: payoff reel
- 11: welder
- 12: cleaning apparatus
- 13: entry-side looper
- 20: annealing furnace
- 22: heating zone
- 24: soaking zone
- 26: cooling zone
- 28: overaging treatment zone
- 29: snout
- 30: downstream line
- 31: hot-dip galvanizing bath
- 32: gas wiping apparatus
- 33: alloying furnace
- 34: cooling apparatus
- 35: delivery-side looper
- 36: temper rolling mill
- 50: tension reel
- 60: magnetic field applying apparatus
- 60A: electromagnet (magnetic field applying apparatus)
- 60B: electromagnet (magnetic field applying apparatus)
- 62A: iron core
- 62B: iron core
- 64A: coil
- 64B: coil
- 66A: magnetic pole face (N pole)
- 66B: magnetic pole face (S pole)
- C: cold-rolled coil
- S: cold-rolled steel sheet
- P: product coil

## Claims

1. A continuous annealing line comprising:
a payoff reel configured to uncoil a cold-rolled coil to feed a cold-rolled steel sheet;
an annealing furnace configured to pass and continuously anneal the cold-rolled steel sheet, wherein a heating zone, a soaking zone, and a cooling zone are disposed in this order from upstream in a sheet passing direction, the annealing furnace annealing the cold-rolled steel sheet in a reducing atmosphere containing hydrogen in the heating zone and in the soaking zone, and cooling the cold-rolled steel sheet in the cooling zone;
a downstream line configured to continuously pass the cold-rolled steel sheet discharged from the annealing furnace therethrough;
a tension reel configured to coil the cold-rolled steel sheet passing through the downstream line; and
a magnetic field applying apparatus configured to apply a steady magnetic field along the sheet transverse direction of the cold-rolled steel sheet to the cold-rolled steel sheet being passed from the cooling zone to the tension reel.

2. The continuous annealing line according to claim 1, wherein the magnetic field applying apparatus is disposed in the cooling zone.

3. The continuous annealing line according to claim 1 or 2, wherein the magnetic field applying apparatus is disposed in a position that enables application of the magnetic field to the cold-rolled steel sheet passing through the downstream line.

4. The continuous annealing line according to any one of claims 1 to 3, wherein the magnetic field applying apparatus comprises an electromagnet disposed outside a transverse direction edge of the cold-rolled steel sheet, and the electromagnet has a magnetic pole face facing a transverse direction edge surface of the cold-rolled steel sheet.

5. The continuous annealing line according to any one of claims 1 to 3, wherein the magnetic field applying apparatus comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.

6. The continuous annealing line according to any one of claims 1 to 5, wherein the magnetic field applying apparatus is set so that magnetic flux density in the sheet transverse direction of the cold-rolled steel sheet is 0.1 T to 15 T.

7. A continuous hot-dip galvanizing line comprising:
the continuous annealing line according to claim 1; and
as the downstream line, a hot-dip galvanizing bath disposed downstream of the annealing furnace in the sheet passing direction and in which the cold-rolled steel sheet is dipped to apply a hot-dip galvanized coating onto the cold-rolled steel sheet.

8. The continuous hot-dip galvanizing line according to claim 7, wherein the magnetic field applying apparatus is disposed in a position that enables application of the magnetic field to the cold-rolled steel sheet being passed upstream from the hot-dip galvanizing bath.

9. The continuous hot-dip galvanizing line according to claim 7 or 8, wherein the magnetic field applying apparatus is disposed in a position that enables application of the magnetic field to the cold-rolled steel sheet being passed downstream from the hot-dip galvanizing bath.

10. The continuous hot-dip galvanizing line according to claim 7, further comprising, as the downstream line, an alloying furnace disposed downstream of the hot-dip galvanizing bath in the sheet passing direction and through which the cold-rolled steel sheet is passed to heat and alloy the hot-dip galvanized coating.

11. The continuous hot-dip galvanizing line according to claim 10, wherein the magnetic field applying apparatus is disposed in a position that enables application of the magnetic field to the cold-rolled steel sheet being passed upstream from the hot-dip galvanizing bath.

12. The continuous hot-dip galvanizing line according to claim 10 or 11, wherein the magnetic field applying apparatus is disposed in a position that enables application of the magnetic field to the cold-rolled steel sheet being passed downstream from the hot-dip galvanizing bath.

13. The continuous hot-dip galvanizing line according to any one of claims 7 to 12, wherein the magnetic field applying apparatus comprises an electromagnet disposed outside a transverse direction edge of the cold-rolled steel sheet, and the electromagnet has a magnetic pole face facing a transverse direction edge surface of the cold-rolled steel sheet.

14. The continuous hot-dip galvanizing line according to any one of claims 7 to 12, wherein the magnetic field applying apparatus comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.

15. The continuous hot-dip galvanizing line according to any one of claims 7 to 14, wherein the magnetic field applying apparatus is set so that magnetic flux density in the sheet transverse direction of the cold-rolled steel sheet is 0.1 T to 15 T.

16. A method of producing a steel sheet, the method comprising, in the following order:
a process (A) of uncoiling a cold-rolled coil to feed a cold-rolled steel sheet by a payoff reel;
a process (B) of passing the cold-rolled steel sheet through an annealing furnace wherein a heating zone, a soaking zone, and a cooling zone are disposed in this order from upstream in a sheet passing direction, to continuously anneal the cold-rolled steel sheet by a process (B-1) of annealing the cold-rolled steel sheet in a reducing atmosphere containing hydrogen in the heating zone and in the soaking zone, and a process (B-2) of cooling the cold-rolled steel sheet in the cooling zone;
a process (C) of continuously passing the cold-rolled steel sheet discharged from the annealing furnace; and
a process (D) of coiling the cold-rolled steel sheet by a tension reel to obtain a product coil,
wherein the method further comprises, in a period from the process (B-2) and prior to the process (D), a magnetic field applying process of applying a steady magnetic field along the sheet transverse direction of the cold-rolled steel sheet to the cold-rolled steel sheet being passed.

17. The method of producing a steel sheet according to claim 16, wherein the magnetic field applying process is performed in the process (B-2).

18. The method of producing a steel sheet according to claim 16 or 17, wherein the magnetic field applying process is performed in the process (C).

19. The method of producing a steel sheet according to claim 16, wherein the process (C) comprises a process (C-1) of dipping the cold-rolled steel sheet into a hot-dip galvanizing bath disposed downstream of the annealing furnace in the sheet passing direction to apply a hot-dip galvanized coating onto the cold-rolled steel sheet.

20. The method of producing a steel sheet according to claim 19, wherein the magnetic field applying process is performed prior to the process (C-1).

21. The method of producing a steel sheet according to claim 19 or 20, wherein the magnetic field applying process is performed after the process (C-1).

22. The method of producing a steel sheet according to claim 19, wherein the process (C) further comprises, after the process (C-1), a process (C-2) of passing the cold-rolled steel sheet though an alloying furnace disposed downstream of the hot-dip galvanizing bath, to heat and alloy the hot-dip galvanized coating.

23. The method of producing a steel sheet according to claim 22, wherein the magnetic field applying process is performed prior to the process (C-1).

24. The method of producing a steel sheet according to claim 22 or 23, wherein the magnetic field applying process is performed after the process (C-1).

25. The method of producing a steel sheet according to any one of claims 16 to 24, wherein magnetic flux density in the sheet transverse direction of the cold-rolled steel sheet is 0.1 T to 15 T in the magnetic field applying process.

26. The method of producing a steel sheet according to any one of claims 16 to 25, wherein, in the magnetic field applying process, a steady magnetic field is applied by a magnetic field applying apparatus that comprises an electromagnet disposed outside a transverse direction edge of the cold-rolled steel sheet, and the electromagnet has a magnetic pole face facing a transverse direction edge surface of the cold-rolled steel sheet.

27. The method of producing a steel sheet according to any one of claims 16 to 25, wherein, in the magnetic field applying process, a steady magnetic field is applied by a magnetic field applying apparatus that comprises a pair of electromagnets disposed outside transverse direction edges of the cold-rolled steel sheet, and each electromagnet of the pair of electromagnets has a magnetic pole face facing a transverse direction edge surface of the cold-rolled steel sheet, and one of the magnetic pole faces is an N pole and the other is an S pole.

28. The method of producing a steel sheet according to any one of claims 16 to 27, wherein the cold-rolled steel sheet is a high strength steel sheet having a tensile strength of 590 MPa or more.

29. The method of producing a steel sheet according to any one of claims 16 to 27, wherein the cold-rolled steel sheet comprises a chemical composition containing, in mass%,
C: 0.030 % to 0.800 %,
Si: 0.01 % to 3.00 %,
Mn: 0.01 % to 10.00 %,
P: 0.001 % to 0.100 %,
S: 0.0001 % to 0.0200 %,
N: 0.0005 % to 0.0100 %, and
Al: 0.001 % to 2.000 %,
with the balance being Fe and inevitable impurity.

30. The method of producing a steel sheet according to claim 29, wherein the chemical composition further contains, in mass%, at least one element selected from the group consisting of
Ti: 0.200 % or less,
Nb: 0.200 % or less,
V: 0.500 % or less,
W: 0.500 % or less,
B: 0.0050 % or less,
Ni: 1.000 % or less,
Cr: 1.000 % or less,
Mo: 1.000 % or less,
Cu: 1.000 % or less,
Sn: 0.200 % or less,
Sb: 0.200 % or less,
Ta: 0.100 % or less,
Ca: 0.0050 % or less,
Mg: 0.0050 % or less,
Zr: 0.1000 % or less, and
REM: 0.0050 % or less.

31. The method of producing a steel sheet according to any one of claims 16 to 27, wherein the cold-rolled steel sheet is a stainless steel sheet comprising a chemical composition containing, in mass%,
C: 0.001 % to 0.400 %,
Si: 0.01 % to 2.00 %,
Mn: 0.01 % to 5.00 %,
P: 0.001 % to 0.100 %,
S: 0.0001 % to 0.0200 %,
Cr: 9.0 % to 28.0 %,
Ni: 0.01 % to 40.0 %,
N: 0.0005 % to 0.500 %, and
Al: 0.001 % to 3.000 %,
with the balance being Fe and inevitable impurity.

32. The method of producing a steel sheet according to claim 31, wherein the chemical composition further contains, in mass%, at least one element selected from the group consisting of
Ti: 0.500 % or less,
Nb: 0.500 % or less,
V: 0.500 % or less,
W: 2.000 % or less,
B: 0.0050 % or less,
Mo: 2.000 % or less,
Cu: 3.000 % or less,
Sn: 0.500 % or less,
Sb: 0.200 % or less,
Ta: 0.100 % or less,
Ca: 0.0050 % or less,
Mg: 0.0050 % or less,
Zr: 0.1000 % or less, and
REM: 0.0050 % or less.

33. The method of producing a steel sheet according to any one of claims 16 to 32, wherein the product coil has a diffusible hydrogen content of 0.50 mass ppm or less.
